# EUROPEAN PATENT SPECIFICATION

(11) **EP 3 134 245 B1**
(45) Date of publication and mention of the grant of the patent: **15.01.2020**
(21) Application number: 15728161.9
(22) Date of filing: 22.04.2015
(51) Int. Cl.: B29C 43/18, B29C 43/36, B65D 51/24, B65D 41/04, B29C 43/38, B29L 31/56, B29K 23/00

(54) **METHOD AND APPARATUS FOR OBTAINING A CUP-SHAPED BODY**
VERFAHREN UND VORRICHTUNG ZUR HERSTELLUNG EINES KAPPENFÖRMIGEN KÖRPERS
PROCÉDÉ ET APPAREIL PERMETTANT D'OBTENIR UN CORPS EN FORME DE CAPUCHON

(30) Priority: 23.04.2014 IT MO20140110
(43) Date of publication of application: 01.03.2017
(73) Proprietor: Sacmi Cooperativa Meccanici Imola Societa' Cooperativa, 40026 Imola (BO) (IT)
(72) Inventor: FALZONI, Alessandro, I-40026 Imola (Bologna) (IT); SPADONI, Cristian, I-48022 Lugo (Ravenna) (IT)
(74) Representative: Colò, Chiara
(86) International application number: PCT/IB2015/052942
(87) International publication number: WO 2015/162572

(56) References cited:
- WO-A1-01/68468
- WO-A1-02/066222
- WO-A1-2015/101649
- JP-A- S6 484 858
- US-A- 5 160 687
- US-A1- 2008 302 753
- US-A1- 2012 091 093
- DATABASE WPI Week 199441 Thomson Scientific, London, GB; AN 1994-329454 XP002735569, -& JP H06 254884 A (NIPPON CROWN CORK KK) 13 September 1994 (1994-09-13)

## Description

The invention relates to a method and an apparatus for obtaining an object having a cup-shaped body, such as for example a cap. The invention further relates to an object having a cup-shaped body, particularly a cap, for example made of polymeric material by means of a moulding process. Caps are known and widely used which comprise a side wall, extending about an axis and suitable for engaging with a neck of a container, and a transverse wall, arranged transversely to the axis for closing the container. An increasingly need is felt by manufacturers of substances packaged using caps of the known type, to customize their own products so as to be able to meet specific technical requirements or make the products easily recognizable by consumers. This can be done, for example, by using printed labels applied on the outside of the container in which the substance is contained.

The labels mentioned hereinabove, however, have the drawback that they are not visible in all positions in which the container can be placed. They are not immediately visible, for example, when a plurality of containers are arranged in rows positioned one behind the other on a low surface, such as the floor of a store. The labels may also be non-visible when a plurality of containers are partially arranged inside a packaging which covers the side surface thereof. This may be the case of a group of containers placed inside an open cardboard box, or wrapped laterally by a polymeric film. Additionally, the labels of the known type can be easily damaged especially if made of paper, which suggests to the consumer the idea that the packaged product is also damaged, thus leading the consumer to exclude the packaging.

US 2008/0302753 discloses a method for obtaining a container closure comprising a cap and a gripping portion. The cap is provided with a cup-shaped body having a side wall extending about an axis and a transverse wall arranged perpendicularly to said axis. The gripping portion covers the entire transverse wall and extends partially also above the side wall of the cap.

The method disclosed in US 2008/0302753 comprises first of all a step of forming the cap. Subsequently, the cap is screwed on a support which engages with a thread provided inside the cup-shaped body. The support carrying the cap is brought into a moulding station in a position facing a mould cavity. A dose of elastomeric material intended to form the gripping portion is placed into the mould cavity. At this stage, the support carrying the cap is moved towards the mould cavity so as to compress the elastomeric material of the dose between the cap and the mould cavity, until the gripping portion is obtained.

The method disclosed in US 2008/0302753 exhibits some drawbacks due to the fact that the dose of elastomeric material is placed inside the mould cavity, which is usually made of metal. When the dose is placed inside the mould cavity, the temperature of the dose portion that first comes into contact with the metal forming the mould cavity, decreases rapidly. This portion tends to cool in different ways with respect to the remaining portions of the dose, and in particular it tends to crystallize more and/or more quickly.

On the gripping portion of the finished container closure, a bright spot can be formed in a position corresponding to the material of the dose which came first into contact with the metal of the mould cavity. This is due to the different cooling ways of the material that has come first into contact with the mould cavity with respect to the surrounding material. The bright spot that is formed on the gripping portion of the finished container closure is clearly visible by the user and is aesthetically unpleasant.

Furthermore, the material of the dose which first contacts the mould cavity, if excessively cooled due to contact with the metal, tends to reduce its ability to adhere to the transverse wall of the cap. This can jeopardize adhesion between the anchoring portion and the cup-shaped body. Similar drawbacks can be found in JP 3273270, which discloses a method for forming a central portion of a transverse panel of a cap, in which a dose is placed inside a mould cavity.

WO 02/066222 discloses a cap provided with a side wall extending about an axis and a transverse wall arranged perpendicularly to that axis. The cap comprises a disc which is caused to adhere to the transverse wall, during a step of compression moulding the cap. The disc is made of a multilayer material and is provided with barrier properties. The disc is arranged within a recess formed on the transverse wall of the cap and has a diameter slightly smaller than the diameter of the transverse wall.

US 5160687 discloses a cap made of thermoplastic material, provided with a transverse wall having an outer surface on which a thin covering layer is disposed, the covering layer being made of composite laminate material having barrier properties. Such thin cover layer forms a disc that is embedded on the outer surface of the transverse wall of the cap during injection moulding of the cap. The disc covers the entire transverse wall of the cap and also extends along a connecting zone which joins the transverse wall to a cylindrical skirt of the cap.

Further examples of prior art caps are disclosed in JP S64 84858 and in WO 2015/101649. The latter document has a priority date preceding the priority date of the present application, but was published after the filing date of the present application.

An object of the invention is to improve the existing packaging, and in particular to customize them and make them easily recognizable by consumers.

A further object is to provide a method and an apparatus which enable to obtain objects easily recognizable by consumers.

A further object is to allow customization of an object so that the object cannot be easily damaged.

Still another object is to provide a method and an apparatus allowing to customize packages in an easily visible manner in the positions in which normal labels can be hidden.

A further object is to provide a method and an apparatus for obtaining an object having a cup-shaped body, which allow to differentiate the properties of the object between one zone and the other thereof. Another object is to provide a method and an apparatus which enable to obtain a customized object, in which any defects generated on the finished object are minimized.

A further object is to provide an apparatus for obtaining a customized object which is structurally simple.

In a first aspect of the invention, there is provided a method according to claim 1.

By compression moulding the dose of polymeric material in contact with the external face of the cup-shaped body, a customized object according to the needs of the producer can be obtained. In particular, the shaped element obtained from the dose may have a colour different from the colour of the cup-shaped body, or it can be provided with writings, designs or logos which enable the object carrying the shaped element to be distinguished from other objects of same kind, produced by different manufacturers.

Additionally, the shaped element can be used for conferring the object specific technical properties, by selecting for producing the shaped elements particular materials, which are not suitable for making the entire cup-shaped body due to technical or cost reasons. By way of example, the shaped element can be obtained by using a so-called "soft touch" material, so as to give the user an impression of softness when touched.

Finally, the shaped element is stably anchored to the cup-shaped body, since it was compression-moulded directly on the outer face of the transverse wall. Therefore, the shaped element is hardly damaged. The drawbacks previously described with reference to US 2008/0302753 and JP 3273270, in particular the drawbacks due to a non-uniform cooling of the dose of polymeric material, can be overcome by placing the dose on the outer face of the transverse wall. Indeed, any defects such as bright spots, due to a premature cooling of the portion of dose that comes first into contact with the transverse wall of the cup-shaped body, are not visible from the outside, since they are formed at an interface between the shaped element and the transverse wall.

Moreover, if - as often happens - the object is made of a thermally insulating material such as a polymeric material, the portion of the dose that is first in contact with the transverse wall is cooled down to a limited extent. This avoids compromising adhesion between the shaped element and the transverse wall.

In an embodiment, the cup-shaped body is the body of a container cap. The container cap, having on the outer face of its transverse wall a shaped element obtained by compression moulding, enables the container on which it is applied to be customized. In particular, the shaped element remains easily visible even in situations in which the labels applied to the container may be partially hidden, for example when a plurality of containers are arranged next to one another on the floor of a shop, or inserted in a box open at the top thereof, or still wrapped laterally by a polymeric film.

The shaped element can be configured as a disc, particularly a circular disc.

In an embodiment, on the outer face of the cup-shaped body a recess is obtained, in which the dose of polymeric material is placed.

This allows the polymeric material to be laterally contained during compression moulding.

The dose may be compression moulded in such a way that the shaped element has a free surface which is flush with, or anyhow substantially flush with, a perimeter zone of the outer face arranged around the recess. In this way, the object provided with the shaped element can be delimited by a substantially flat surface in the zone of the shaped element.

In a second aspect of the invention, there is provided an apparatus according to claim 7.

The apparatus provided by the second aspect of the invention allows a customized object to be obtained, owing to the shaped element applied to the cup-shaped body, which makes the object immediately recognizable.

The apparatus comprises a locking element suitable for engaging with a peripheral zone of the outer face so as to keep the cup-shaped body stationary in contact with the support element, while the dose is being shaped.

The locking element can be placed around the male moulding element.

The locking element allows the shaped element to be accurately formed on the outer face, even if the apparatus provided by the second aspect of the invention is mounted in a group of a machine, for example a carousel, which moves at high speed.

The invention will be better understood and carried out with reference to the accompanying drawings which illustrate some exemplificative and nonlimiting embodiments thereof, wherein:
Figure 1 is a perspective view showing a cap comprising a cup-shaped body and a shaped element;
Figure 2 is a cross section of a cup-shaped body as that shown in Figure 1;
Figure 3 is a cross section like that of Figure 2, in which on the cup-shaped body a shaped element was formed;
Figure 4 is a cross section like that of Figure 2, showing a cap according to an alternative embodiment;
Figure 5 is a schematic cross section showing an apparatus for moulding a shaped element in contact with the cup-shaped body of Figure 2, in an initial step of a compression moulding process;
Figure 6 shows an enlarged detail of the apparatus of Figure 5, in a following step of the compression moulding process;
Figure 7 is a cross section like that of Figure 6, in a final step of the compression moulding process;
Figure 8 shows an enlarged detail of the apparatus of Figure 7;
Figure 9 is a cross section like that of Figure 7, showing an apparatus for forming a shaped element on a cup-shaped body according to an alternative version.

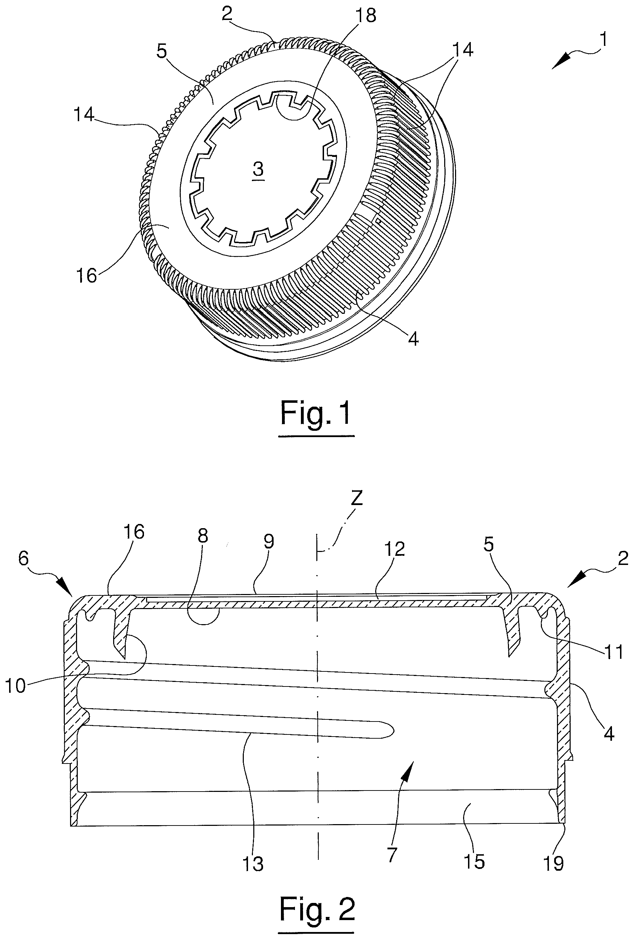

Figure 1 shows a closure element or cap 1 for a container, comprising a cup-shaped body 2 on which a shaped element 3 is applied.

As better shown in Figure 2, the cup-shaped body 2 comprises a side wall 4 extending around an axis Z. The side wall 4 defines a sort of skirt of the cup-shaped body 2. The side wall 4 can have a substantially cylindrical geometry.

The cup-shaped body 2 further comprises a transverse wall 5, arranged transversely, in particular perpendicularly, to the axis Z. The transverse wall 5 may have a substantially circular plan-form. The transverse wall 5 is joined to the side wall 4 in a joining zone 6.

The transverse wall 5 and the side wall 4 define a concavity 7. The latter is suitable for receiving an end portion of a container neck, so that the cap 1 can close the container.

The transverse wall 5 is bounded by an inner face 8, facing the concavity 7. On the inner face 8 one or more sealing elements may be obtained, which are suitable for engaging with the neck of the container so as to prevent liquid and/or gaseous substances from exiting the container to reach the outside environment, or from entering from the outside environment into the container, which would cause contaminating of the contents thereof.

The sealing elements can be shaped as annular elements. In particular, in the example shown, on the inner face 8, an inner seal ring 10 is formed, which is concentric with the axis Z and projects towards the inside of the concavity 7 from the inner face 8. The inner seal ring 10 is conformed so as to engage with an inner edge zone of the container neck.

In the example illustrated, on the inner face 8, an outer seal ring 11 is also obtained, which is concentric with the inner seal ring 10 and exhibits a diameter greater than the latter. The outer seal ring 11 is so conformed as to engage with an outer edge zone of the container neck.

In addition, the transverse wall 5 is bounded by a further face or outer face 9, facing the opposite side relative to the inner face 8, namely outwardly the cap 1.

On the outer face 9 a recess 12 is formed, which penetrates inside of the transverse wall 5 to a depth which, by way of example, is less than half the thickness of the transverse wall 5. The recess 12 may have a substantially circular shape, in a plan view, and may be, for example concentric with the axis Z.

The recess 12 is surrounded by an edge zone 16.

The recess 12 may have a diameter smaller than the inner diameter of the inner seal ring 10.

The side wall 4 is provided, on an inner surface thereof, i.e. on a surface facing the concavity 7, with one or more fastening elements 13 which are shaped, for example, as thread portions. The fastening elements 13 are suitable for engaging with further fastening elements obtained on the neck of the container so as to removably secure the cap to the container 1. The side wall 4 can be provided, on an outer surface thereof, with a plurality of knurls 14, shaped for example as lines in relief that extend parallel to the axis Z. The knurls 14 allow the cap 1 to be better grasped, when the cap 1 must be rotated in order to be applied onto the neck of the container or removed therefrom, thus limiting or avoiding the risk that a user's fingers slide in contact with the side wall 4.

A tamper-evident ring 15 is associated to the side wall 4, the tamper-evident ring being arranged at a circumferential edge of the side wall 4, opposite the end of the side wall 4 which is connected to the transverse wall 5.

The tamper-evident ring 15 is initially joined to the side wall 4 along the entire circumferential edge of the latter. Subsequently, a series of circumferential cuts can be made between the tamper-evident ring 15 and the side wall 4. In this way, on the finished cap 1, the tamper-evident ring 15 will be joined to the side wall 4 by means of a plurality of bridge elements, separated from one another by respective cuts.

When the cap 1 is removed for the first time from the container to which it is applied, the tamper-evident ring 15 engages with an annular projection formed on the neck of the container, which hinders removal of the tamper-evident ring 15 from the container. At least some of the bridge elements break and the tamper-evident ring 15 is wholly or partially detached from the side wall 4. In this way, the consumer can recognize that the container has already been opened.

The cup-shaped body 2 can be made of a polymeric material and can be obtained by injection moulding or compression moulding.

In an alternative embodiment, the cup-shaped body 2 can be made of metal.

A shaped element 3 is stably anchored to the outer face 9 of the cup-shaped body 2. In the example shown, the shaped element 3 is conformed as a disc, particularly a circular disc.

The shaped element 3 can be arranged in a position concentric to the axis Z.

The shaped element 3 can be substantially flat.

The shaped element 3 is made of a polymeric material.

The shaped element 3 may be transparent or opaque, and can be of any desired colour. In particular, the shaped element 3 may have a colour different from the colour of the cup-shaped body 2, so as to be clearly distinguishable from the cup-shaped body 2.

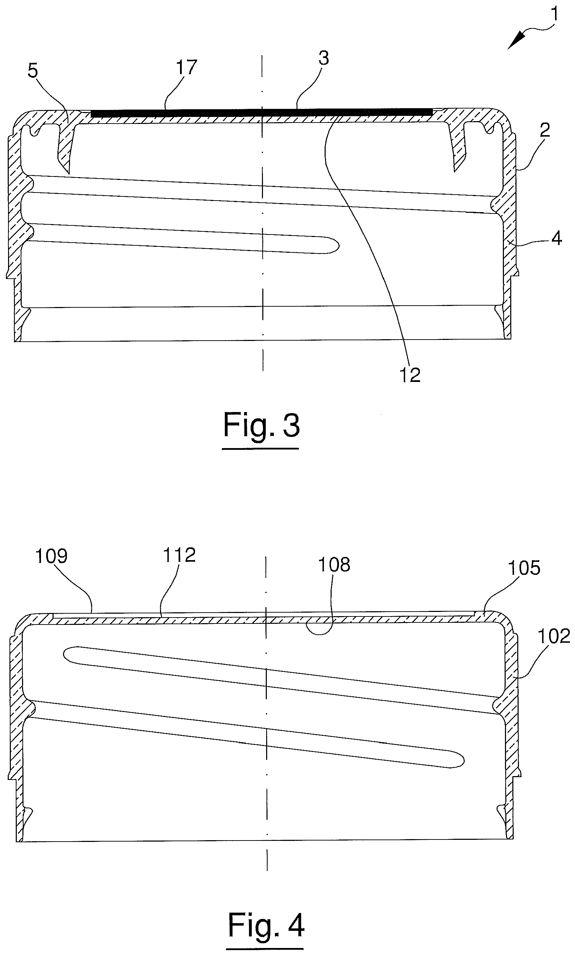

As shown in Figure 3, the shaped element 3 may be positioned inside the recess 12 obtained on the outer face 9 of the transverse wall 5. A free surface 17 of the shaped element 3, which is the upper surface in the position shown in Figure 3, can be flush with the edge zone 16 of the transverse wall 5 surrounding the recess 12.

This feature is however not necessary, since the free surface 17 might be slightly projecting from the edge zone 16 or slightly recessed with respect to the edge region 16.

In the example shown in Figure 1, the free surface 17 of the shaped element 3 is not smooth, but is provided with at least one graphic mark 18, for example a logo, a design or a text, which can project as a relief from the free surface 17 or be recessed through the thickness of the shaped element 3. As will be described in greater detail below, the graphic mark 18 is obtained by compression moulding, at the same time when the shaped element 3 is formed directly on the cup-shaped body 2.

In an alternative embodiment, the free surface 17 can be smooth. In this case, if desired, a message can be associated to the shaped element 3, for example in the form of a writing, by means of a printing technique, particularly a digital technique.

By way of example, the message can be printed on the free surface 17. At least one graphic mark, for example defining a message, can also be printed on a bottom surface of the recess 12. By making the shaped element 3 with a transparent material, the graphic mark printed on the bottom surface of the recess 12 shall be visible through the shaped element 3.

In a further embodiment, the bottom surface of the recess 12 is not smooth, but it has a graphic mark in relief or recessed. The shaped element 3 is in this case made of a transparent material and the free surface 17 thereof is smooth. The graphic mark obtained on the outer wall 9 can therefore be seen through the shaped element 3.

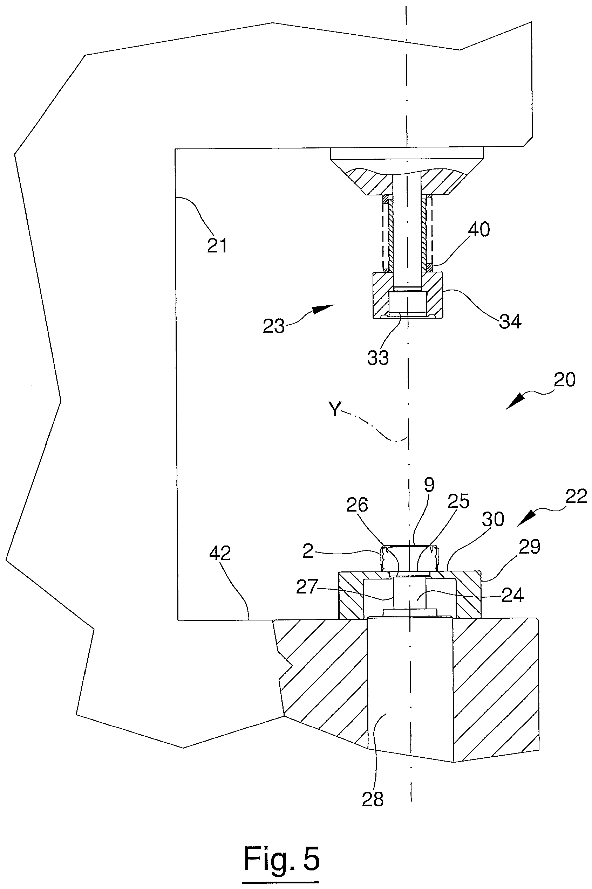

Figure 5 shows an apparatus 20 for obtaining the shaped element 3 on the cup-shaped body 2, by compression moulding a dose of polymeric material.

The apparatus 20 can be mounted on a cap lining machine arranged at the end of a production line for manufacturing caps 1. The production line may include a press for producing the cup-shaped body 2, possibly a folding machine for folding the tamper evident ring 15 towards the inside of the cup-shaped body 2, a cutting machine for obtaining the circumferential cuts defined between the tamper evident ring 15 and the side wall 4, on the cup-shaped body 2, and possibly a further cap lining machine for obtaining a seal on the inner face 8. The apparatus 20 will in this case be positioned downstream of all the machines listed above.

In an alternative embodiment, the apparatus 20 may also be provided in other positions along a line of production for producing caps 1.

A plurality of apparatuses 20 mounted in a circumferential zone of a carousel 21 can also be provided, the carousel 21 being for example rotatable about a vertical axis of rotation.

The apparatus 20 comprises a support device 22 for supporting the cup-shaped body 2 during moulding. The apparatus 20 further comprises a forming device 23 for forming the shaped element 3 on the outer face 9 of the transverse wall 5.

The forming device 23 and the support device 22 face one another and can be aligned along a moulding axis Y. In the embodiment illustrated, the moulding axis Y is vertical and the support device 22 is placed below the forming device 23. A different mutual arrangement of the support device 22 and the forming device 23 can however also be adopted.

The apparatus 20 comprises a movement device, not shown, for moving the support device 22 and the forming device 23 relative to one another. In the example shown, the movement device is associated to the support device 22, which is movable along the moulding axis Y for going towards, and away from, the forming device 23.

In an alternative embodiment, the movement device may, however, be configured for moving the forming device 23 along the moulding axis Y, while the support device 22 is stationary along such axis. It is also possible that the movement device moves simultaneously both the support device 22 and the forming device 23.

The movement device may comprise an actuator, for example of the mechanical type. In an exemplificative embodiment, the actuator can be driven by a cam.

The support device 22 comprises a support element 24 for supporting the cup-shaped body 2 from the inside. The support element 24 may be movable along the moulding axis Y and can be particularly provided at an upper end of a stem of the actuator of the movement device.

The support element 24 has a resting surface 25, particularly conformed as a flat surface, for restingly receiving the inner face 8 of the cup-shaped body 2. The resting surface 25 can be obtained on a plate 26 of the support element 24, so as to delimit the plate 26 at the top thereof. The plate 26 can have a circular shape, in a plan view, and a diameter smaller than the inner diameter of the inner seal ring 10, in the event that such seal ring is provided on the cup-shaped body 2. In this way, the plate 26 can be placed inside the seal ring 10, so that the resting surface 25 is in contact with the inner face 8 of the cup-shaped body 2.

The plate 26 may be obtained at the upper end of a shank 27 of the support element 24. The shank 27 can be in turn supported by a support body 28 of the support element 24.

The support device 22 may further comprise a peripheral support 29 arranged around the support element 24 in a position concentric with the latter, for supporting a free edge 19 of the tamper evident ring 15 as shown in Figure 2.

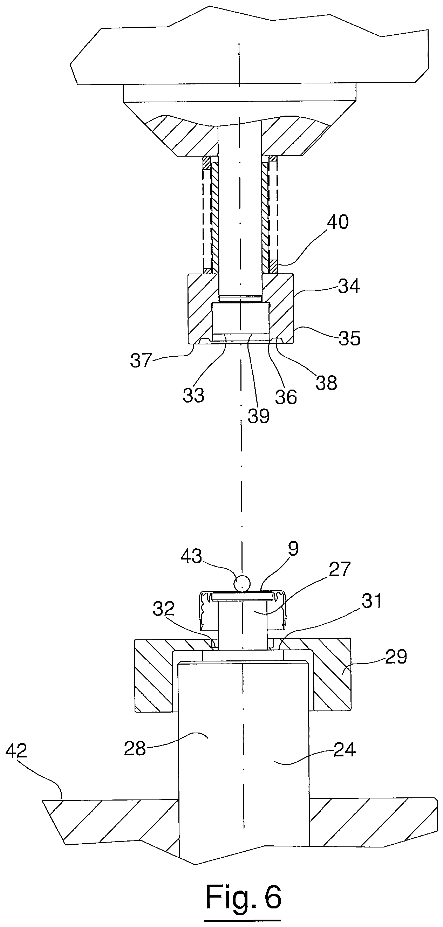

The peripheral support 29 is provided with a central hole wherein the support element 24 is inserted. Furthermore, the peripheral support 29 may be provided with a seat 32, shown in Figure 6, in which the plate 26 can engage.

The peripheral support 29 is movable along the moulding axis Y between a first position or advanced position, shown in Figure 5, in which a support surface 30 of the peripheral support 29 can restingly receive the free edge 19 of the tamper evident ring 15, and a second position or retracted position, shown in Figure 6, in which the peripheral support 29 does not interact with the cup-shaped body 2.

The peripheral support 29 is moved between the advanced position and the retracted position by the support element 24.

In the advanced position, the resting surface 25 of the support element 24 does not protrude from the support surface 30 of the peripheral support 29. This means that the resting surface 25 is flush with the support surface 30, or that the resting surface 25 is at a lower level than the support surface 30. Thus, the free edge 19 of the tamper evident ring 15 can slide in contact with the support surface 30, for example pushed by a movement device, without interfering with the support element 24.

In the advanced position, the peripheral support 29 may rest on a surface 42 of the carousel 21, as shown in Figure 5. In this condition, the plate 26 is received in the seat 32 of the peripheral support 29.

In the retracted position, as shown in Figure 6, the peripheral support 29 may be at a distance from the surface 42 of the carousel 21 and rest against a shoulder 31 of the support body 28.

The peripheral support 29 passes from the advanced position to the retracted position due to movement of the support element 24 relative to the forming device 23. In particular, when the support element 24 rises, the peripheral support 29 slides along the shank 27 and the free edge 19 of the cup-shaped body 2 is detached from the support surface 30. Depending on the length of the shank 27, the peripheral support 29 may also detach from the surface 42 of the carousel 21 while moving to the retracted position.

The forming device 23 comprises a punch or male moulding element 33 for shaping the dose of polymeric material in contact with the outer face 9 of the cup-shaped body 2. To this end, the male moulding element 33 is provided with a forming surface 39 suitable for coming into contact with the polymeric material. The male moulding element 33 may be assembled in a stationary position on the carousel 21.

The apparatus 20 further comprises a locking element 34, which can be included in the forming device 23. In particular, the locking element 34 can surround the male moulding element 33. To this end, the locking element 34 may be provided with a central hole through which the male moulding element 33 passes.

As shown in Figure 6, the locking element 34 is provided with an end 35 suitable for interacting with the cup-shaped body 2. On the end 35 a locking protuberance 36 can be obtained, the locking protuberance 36 having for example a circular shape. The locking protuberance 36 is suitable for coming into contact with the outer face 9 of the transverse wall 5 in order to keep the cup-shaped body 2 stationary relative to the support element 24.

A containment edge 37 can furthermore be obtained on the end 35, the containment edge 37 being suitable for coming into contact with the cup-shaped body 2 in the joining zone 6 between the side wall 4 and the transverse wall 5. The containment edge 37 allows the cup-shaped body 2 to be laterally blocked and to be better kept stationary relative to the support element 24.

The containment edge 37 encircles the locking protuberance 36 and can be separated from the latter by a circular groove 38. The containment edge 37 projects towards the support device 22 more than the locking protuberance 36.

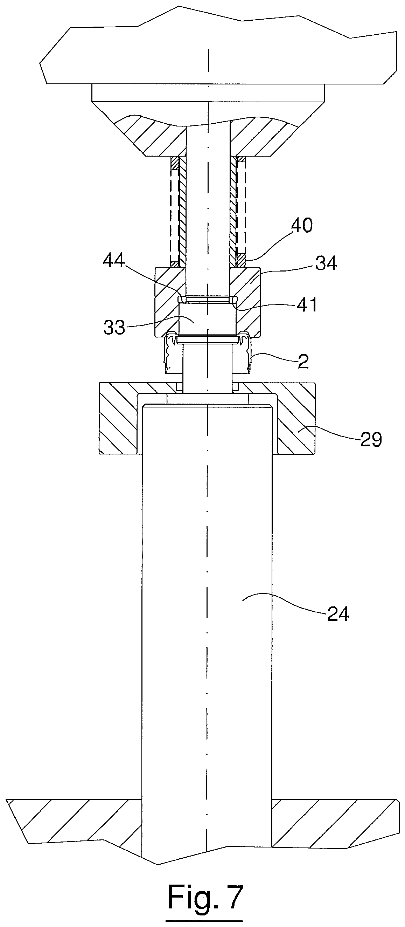

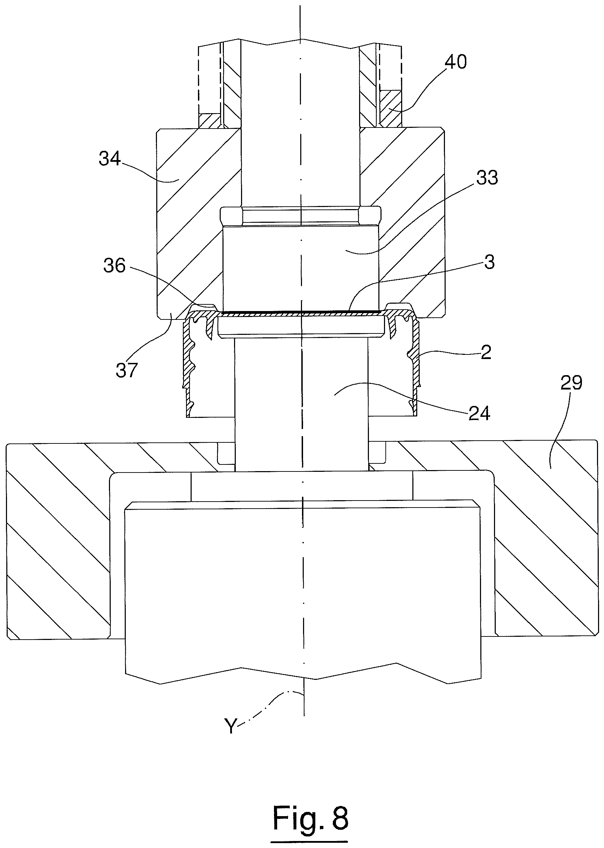

The locking element 34 is movable between an advanced configuration, shown in Figures 5 and 6, and a retracted configuration, shown in Figures 7 and 8. In the advanced configuration, the locking protuberance 36 protrudes relative to the male moulding 33. In the retracted configuration, the locking protuberance 36 is substantially flush with the forming surface 39 of the male moulding element 33, so that both the locking protuberance 36 and the forming surface 39 interact with the cup-shaped body 2. The wording "substantially flush" means that the locking protuberance 36 can be at same level as the forming surface 39, or it can be a few tenths of a millimeter higher or lower than the forming surface 39.

An elastic element 40, for example conformed as a helical spring, is arranged for pushing the locking element 34 towards the support device 22, thereby maintaining an abutment surface 41, obtained inside the locking element 34 (shown in Figure 7), in contact with a further abutment surface 44. The abutment surface 44 is obtained on an enlarged portion of the male moulding element 33.

The elastic element 40 can be arranged in a position encircling the male moulding element 33.

Figure 5 shows an initial step of a method for forming the shaped element 3 on the cup-shaped body 2 by means of the apparatus 20.

In this step, the support device 22 and the forming device 23 are in a distanced position.

The peripheral support 29 is arranged in the advanced position with respect to the support element 24. In particular, the peripheral support 29 may be resting on the surface 42 of the carousel 21.

The resting surface 25 of the support element 24 is at same level as the support surface 30 of the peripheral support 29 so as to define, with the support surface 30, a plane that can restingly receive the cup-shaped body 2.

A movement device not shown, which may comprise for example a star-like carousel, brings the cup-shaped body 2 onto the support device 22. In particular, the cup-shaped body 2 is positioned in such a way that the free edge 19 of the tamper evident ring 15 is resting on the support surface 30. Since in this step the support element 24 does not protrude from the peripheral support 29, the support element 24 does not hinder the cup-shaped body 2 while the latter is positioned onto the support device 22 by the movement device not shown.

The concavity 7 of the cup-shaped body 2 is facing downwards, while the outer face 9 of the transverse wall 5 is facing upwards.

The elastic element 40 maintains the locking element 34 in the advanced configuration with respect to the male moulding element 33.

Subsequently, as shown in Figure 6, a dose 43 of polymeric material is placed onto the outer face 9 of the cup-shaped body 2. The dose 43 is particularly arranged in the recess 12 which is obtained on the outer face 9.

The dose 43 can be obtained by collecting from an extruder a predetermined amount of polymeric material in a molten state. The dose 43 is then brought onto the outer face 9 by a transferring device not illustrated. When the dose 43 is placed onto the outer face 9, the polymeric material of the dose 43 still has a temperature which is sufficiently high to enable the polymeric material to be shaped by the male moulding element 33. The movement device now moves the support element 24 towards the forming device 23.

The support element 24 thus moves towards the transverse wall 5 of the cup-shaped body 2, until it comes into contact with the lower face 8, as shown in Figure 6.

While the support element 24 moves towards the forming device 23, the peripheral support 29 is detached from the surface 42 of the carousel 21 and slides along the shank 27 of the support element 24 until it reaches the retracted position as shown in Figure 6. In this position, the peripheral support 29 is resting on the shoulder 31 of the support element 24.

The cup-shaped body 2 is now supported by the support element 24. In particular, the lower face 8 is resting on the resting surface 25. The movement device continues to move the support element 24 towards the forming device 23.

The outer face 9 of the transverse wall 5 is thus brought into contact with the locking element 34, and in particular in contact with the locking protuberance 36. When this occurs, a closed chamber is defined between the support device 22 and the support device 24. This closed chamber is delimited by the transverse wall 5 of the cup-shaped body 2, by the forming surface 39 of the male moulding element 33, and by the locking element 36.

In these moments, the dose 43 starts interacting with the male moulding element 33, and being crushed between the forming surface 39 and the transverse wall 5. A forming step for forming the polymeric material thus starts. The forming step will originate the shaped element 3.

The movement device continues to move the support element 24 towards the male moulding element 33. After the cup-shaped body 2 has come in contact with the locking element 34, also the latter is moved by the support element 24 together with the cup-shaped body 2, i.e. upwards in the example shown. During this step, the elastic element 40 is compressed. The volume of the closed chamber defined between the cup-shaped body 2, the male moulding element 33 and the locking element 34, is gradually reduced. Simultaneously, the polymeric material forming the dose 43 is compressed and gradually assumes the final shape of the shaped element 3.

The locking element 34 moves from the advanced configuration to the retracted configuration.

Movement of the support element 24 stops in a forming position in which the polymeric material has filled the whole space defined between the cup-shaped body 2, the male moulding element 33 and the locking element 34, that is to say, after the shaped element 3 was formed by compression moulding. This position is shown in Figures 7 and 8.

As shown in Figure 8, at the end of the forming step, the polymeric material of the dose 43 - shown in black for the sake of clear representation - has filled the entire recess 12 obtained on the outer face 9 of the transverse wall 5. The shaped element 3 thus formed, is delimited by a free surface 17, which in the example of Figure 8 is its upper surface, the free surface 17 being substantially flush with the upper surface of the edge zone 16 of the transverse wall 5.

While the shaped element 3 is being formed, the locking element 34 prevents movement of the cup-shaped body 2 with respect to the support element 24. To this end, the locking protrusion 36 is in contact with the edge zone 16 and pushes the transverse wall 5 against the resting surface 25 with a force substantially parallel to the axis Z, as shown in Figure 8. The containment edge 37 is instead in contact with the joining zone 6 between the side wall 4 and the transverse wall 5, and in particular surrounds the joining zone 6, so as to avoid lateral displacement of the cup-shaped body 2, i.e. displacement of the cup-shaped body 2 in a direction arranged transversely relative to the moulding axis Y.

During the moulding step, the support element 24 has the function of supporting the cup-shaped body 2, so as to allow the male moulding element 33 to crush the polymeric material of the dose 43 in contact with the outer face 9, without deforming the transverse wall 5. To this end, in the example shown, the resting surface 25 of the support element 24 is wider than the forming surface 39 of the male moulding element 33 and of the recess 12. In other words, the diameter of the resting surface 25 is greater than the diameter of the recess 12 and than the diameter of the forming surface 39. This ensures that the support element 24 can support the transverse wall 5 in the whole zone in which the shaped element 3 will be obtained.

The resting surface 25 is smaller (i.e. it has a smaller diameter) than the inner seal ring 10, so as to be able to support the transverse wall 5 in the whole area of the shaped element 3. For this reason, also the diameter of the recess 12, and consequently of the shaped element 3, is smaller than the inner diameter of the inner seal ring 10.

The support element 24 and the male moulding element 33 remain in the position shown in Figures 7 and 8 for a time sufficient to ensure that the shaped element 3 cools down until it can be handled without being damaged. To this end, the forming device 23, and possibly the support device 22 as well, may be provided with respective cooling circuits that are not shown.

Subsequently, the support element 24 is moved away from the forming device 23, the position of Figure 5 is once again reached and the cap 1 is removed from the apparatus 20, with a sequence of steps arranged in an opposite order with respect to the previously described sequence of steps. The cap 1 can now proceed towards any possible following processing steps, or towards storage.

The apparatus 20 is instead ready for receiving a new cup-shaped body 2 and for forming a new shaped element 3 thereon.

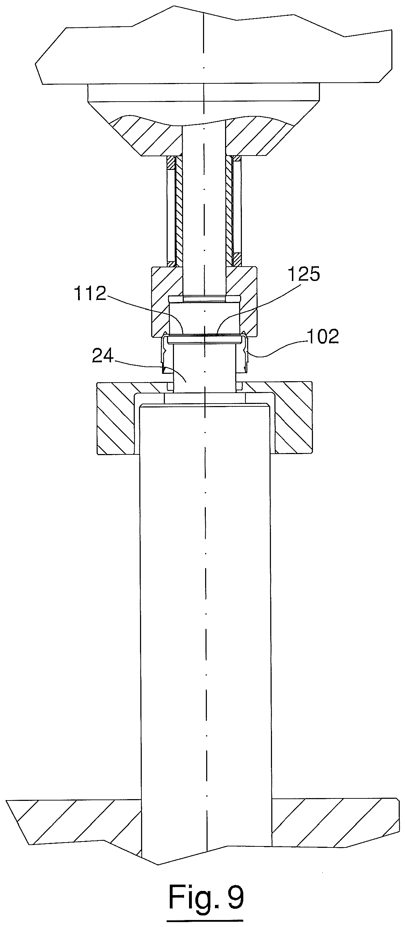

Figure 4 shows a cup-shaped body 102 according to an alternative embodiment, on which a shaped element 3 can be shaped. The cup-shaped body 102 of Figure 4 differs from the cup-shaped body 2 of Figure 2 mainly because it comprises a transverse wall 105 provided with an inner face 108 which is substantially smooth. In other words, on the inner face 108 no seal rings are obtained. In this case, the transverse wall 105 may be bounded by an outer face 109 which has a recess 112 that is wider than the recess 12 shown in Figure 2, i.e. having a greater diameter than the diameter of the recess 12. As shown in Figure 9, which illustrates a step of the moulding process corresponding to the step of Figures 7 and 8, the support element 24 can have a resting surface 125 wider than that of the cup-shaped body 2 shown in Figure 2, because the dimensions of the resting surface 125 are not limited by the inner seal ring 10. Accordingly, the transverse wall 105 can be supported on a wider extension and the recess 112, as well as the shaped element 3, may have larger diameters than the ones shown in Figures 2 and 3.

However, the forming surface 39 of the male moulding element 33 can be smooth, if the shaped element 3 is to be smooth. As an alternative, the forming surface 39 of the male moulding element 33 can be provided with a pattern such as a design, a writing or a logo penetrating towards the inside of the forming surface 39 or projecting outwardly, if a graphic mark, in relief or recessed, is to be obtained on the shaped element 3.

The shaped element 3 is stably anchored to the transverse wall 5, because it is compression-moulded directly on the outer face 9. A particular surface roughness can be adopted in the recess 12 for improving adhesion of the shaped element 3 to the transverse wall 5. This may be helpful in particular for certain combinations of the materials of the shaped element 3 and the cup-shaped body 2.

Although in the previous examples reference was always made to shaped elements 3 having the shape of a full disc, other shapes are theoretically also possible for the shaped elements 3.

In addition, on the inner face of the transverse wall of the cup-shaped body 2 on which the shaped element 3 is moulded, an annular or full seal can be formed, by compression moulding a corresponding dose of polymeric material, prior to or after obtaining the shaped element 3. Finally, the cup-shaped body can have shapes other than the shape of a cap, and particularly it can be a body of a container.

The cup-shaped body 2 can be made of one of the following materials:
- high density polyethylene (HDPE), which is particularly but not exclusively obtained by using Ziegler-Natta catalysts or metallocene catalysts;
- low-density polyethylene (LDPE) or linear low-density polyethylene (LLDPE), particularly but not exclusively obtained by using Ziegler-Natta catalysts or metallocene catalysts;
- polypropylene (PP), in particular in the form of homopolymer, or random copolymer, or heterophasic copolymer.

The shaped element 3 may made of one of the following materials:
- high density polyethylene (HDPE), which is particularly but not exclusively obtained by using Ziegler-Natta catalysts or metallocene catalysts;
- low-density polyethylene (LDPE) or linear low-density polyethylene (LLDPE), particularly but not exclusively obtained by using Ziegler-Natta catalysts or metallocene catalysts;
- thermoplastic materials based on polyolefins, in particular ethylenepropylene copolymers, ethylene-higher alpha olefins copolymers, propylene-higher alpha olefins copolymers;
- elastomeric compounds containing styrenic block copolymers and polymeric materials already listed above.

In general, the materials of the cup-shaped body 2 and of the shaped element 3 are made of, are selected in such a manner that chemical affinity, and therefore adhesion, are ensured between the shaped element 3 and the cup-shaped body 2, so as to prevent these two components from detaching from one another during normal handling.

In addition, it is advisable that the stiffness of the material forming the cup-shaped body 2 is greater than the stiffness of the material forming the shaped element 3. The stiffness can be expressed for example by the elastic modulus or Young's modulus.

Finally, the materials of the cup-shaped body 2 and the shaped element 3 are selected in such a way that the melting temperature of the material forming the cup-shaped body 2 is higher than the melting temperature of the material forming the shaped element 3.

## Claims

1. A method comprising the steps of:
- providing a cup-shaped body (2; 102), said body (2; 102) having a side wall (4) extending around an axis (Z) and a transverse wall (5; 105) arranged transversely to the axis (Z) for delimiting a concavity (7) of the body (2), the transverse wall (5; 105) having an inner face (8; 108) facing the concavity (7) and an outer face (9; 109) opposite the inner face (8; 108);
- placing a dose (43) of polymeric material onto the outer face (9; 109) of the transverse wall (5; 105);
- compression moulding the dose (43) in contact with the outer face (9; 109) by means of a male moulding element (33), thereby obtaining from the dose (43) a shaped element (3) attached to the transverse wall (5; 105),
- wherein, during the step of compression moulding, the body (2; 102) is supported by a support element (24) which engages with the inner face (8; 108) of the transverse wall (5; 105),
- and wherein a locking element (34) keeps the body (2; 102) in a fixed position in contact with the support element (24), while the dose (43) is compression moulded,
**characterized in that** the locking element (34) comprises a locking protuberance (36) shaped like a closed ring, the locking protuberance (36) contacting the outer face (9; 109) in a zone surrounding the shaped element (3), thereby keeping the transverse wall (5; 105) pressed against the support element (24).

2. A method according to claim 1, wherein the cup-shaped body (2; 102) is a body of a container cap (1), the shaped element (3) being preferably a full disc, particularly a circular disc.

3. A method according to any preceding claim, wherein, during the step of placing, the dose (43) is positioned in a recess (12; 112) made on the outer face (9; 109) of the body (2; 102).

4. A method according to claim 3, wherein, during the step of compression moulding, the dose (43) is crushed until the shaped element (3) obtained from the dose (43) has a free surface (17) flush with a surface of an edge zone (16) of the outer face (9; 109), the edge zone (16) surrounding the recess (12; 112).

5. A method according to any preceding claim, wherein, during the step of compression moulding, at least one graphic mark (18) is obtained on the shaped element (3), the at least one graphic mark (18) being in relief or recessed.

6. A method according to any one of claims 1 to 4, wherein the shaped element (3) is made of a transparent material, so that at least one graphic mark provided on the outer face (9; 109) of the body (2; 102) below the shaped element (3) is visible.

7. An apparatus for compression moulding a dose (43) of polymeric material in contact with a cup-shaped body (2; 102), said body (2; 102) having a side wall (4) extending around an axis (Z) and a transverse wall (5; 105) arranged transversely to the axis (Z) for delimiting a concavity (7) of the body (2; 102), the transverse wall (5; 105) having an inner face (8; 108) facing the concavity (7) and an outer face (9; 109) opposite the inner face (8; 108), the apparatus (20) comprising:
- a support element (24) configured to be engaged with the inner face (8; 108) of the transverse wall (5; 105) so as to support the body (2) while the dose (43) is compression moulded;
- a male moulding element (33) for shaping the dose (43) in contact with said outer face (9; 109), so as to obtain from the dose (43) a shaped element (3) attached to the transverse wall (5; 105);
- a locking element (34) for keeping the body (2; 102) in a fixed position in contact with the support element (24), while the dose (43) is compression moulded,
**characterized in that** the locking element (34) comprises a locking protuberance (36) shaped like a closed ring, the locking protuberance (36) being configured to contact the outer face (9; 109) in a zone surrounding the shaped element (3), so as to keep the transverse wall (5; 105) pressed against the support element (24).

8. An apparatus according to claim 7, wherein the locking element (34) comprises a containment edge (37) for contacting the body (2) in a joining zone (6) joining the side wall (4) and the transverse wall (5; 105), so as to prevent lateral displacements of the body (2) while the dose (43) is compression moulded.

9. An apparatus according to claim 8, wherein the containment edge (37) surrounds the locking protuberance (36), an annular groove (38) separating the locking protuberance (36) from the containment edge (37).

10. An apparatus according to any one of claims 7 to 9, wherein the locking element (34) surrounds the male moulding element (33) and is movable relative to the male moulding element (33), particularly against the action of an elastic element (40).

11. An apparatus according to any one of claims 7 to 10, and further comprising a peripheral support (29) surrounding the support element (24) for restingly receiving a peripheral edge (19) of the side wall (4), the peripheral edge (19) being arranged at an end of the side wall (4) opposite the transverse wall (5; 105).

12. An apparatus according to claim 11, wherein the peripheral support (29) and the support element (24) are movable relative to one another between a first position in which the peripheral support (29) is at a higher or the same level as the support element (24), so that the peripheral support (29) supports the peripheral edge (19) of the side wall (4), and a second position in which the support element (24) protrudes with respect to the peripheral support (29), so that the body (2; 102) is supported by the support element (24) without interfering with the peripheral support (29).

13. An apparatus according to any one of claims 7 to 12, wherein the support element comprises a resting surface (25) for receiving the inner face (8; 108) of the body (2; 102) resting on it, the apparatus preferably further comprising a movement device for moving the male moulding element (33) and the support element (24) relative to one another between a distanced position, in which the dose (43) is placed on the outer face (9; 109) and a forming position, in which the dose (43) is shaped between the male moulding element (33) and the transverse wall (5; 105).

## Patentansprüche

1. Verfahren, folgende Schritte umfassend:
- Bereitstellen eines becherförmigen Körpers (2; 102), wobei der Körper (2; 102) eine Seitenwand (4) aufweist, die sich um eine Achse (Z) erstreckt, und eine Querwand (5; 105), die quergerichtet zu der Achse (Z) angeordnet ist, um eine Konkavität (7) des Körpers (2) zu begrenzen, wobei die Querwand (5; 105) eine Innenfläche (8; 108) aufweist, die der Konkavität (7) zugewandt ist, und eine Außenfläche (9; 109), die der Innenfläche (8; 108) gegenüberliegt;
- Aufbringen einer zugemessenen Menge (43) Polymermaterial auf die Außenfläche (9; 109) der Querwand (5; 105);
- Formpressen der zugemessenen Menge (43) in Kontakt mit der Außenfläche (9; 109) mittels eines als Patrize wirkenden Formelements (33), um aus der zugemessenen Menge (43) ein geformtes Element (3) zu erhalten, das an der Querwand (5; 105) angebracht ist,
- wobei, während des Schrittes des Formpressens, der Körper (2; 102) durch ein Stützelement (24) abgestützt ist, das mit der Innenfläche (8; 108) der Querwand (5; 105) in Eingriff gelangt,
- und wobei ein Blockierelement (34) den Körper (2; 102) in einer festen Stellung in Kontakt mit dem Stützelement (24) hält, während die zugemessene Menge (43) formgepresst wird,
**dadurch gekennzeichnet, dass** das Blockierelement (34) einen in Form eines geschlossenen Rings ausgebildeten Blockiervorsprung (36) umfasst, wobei der Blockiervorsprung (36) die Außenfläche (9; 109) in einer das geformte Element (3) umgebenden Zone berührt, um somit die Querwand (5; 105) gegen das Stützelement (24) gedrückt zu halten.

2. Verfahren nach Anspruch 1, wobei der becherförmige Körper (2; 102) ein Körper eines Behälterdeckels (1) ist, und das geformte Element (3) vorzugsweise eine volle Scheibe und insbesondere eine kreisförmige Scheibe ist.

3. Verfahren nach einem der vorhergehenden Ansprüche, wobei, während des Schrittes des Aufbringens, die zugemessene Menge (43) in einer Aussparung (12; 112) aufgebracht wird, die auf der Außenfläche (9; 109) des Körpers (2; 102) ausgebildet ist.

4. Verfahren nach Anspruch 3, wobei, während des Schrittes des Formpressens, die zugemessene Menge (43) zusammengedrückt wird, bis das aus der zugemessenen Menge (43) erhaltene geformte Element (3) eine freie Oberfläche (17) aufweist, die bündig mit einer Randzone (16) der Außenfläche (9; 109) ist, wobei die Randzone (16) die Aussparung (12; 112) umgibt.

5. Verfahren nach einem der vorhergehenden Ansprüche, wobei, während des Schrittes des Formpressens, zumindest ein grafisches Kennzeichen (18) auf dem geformten Element (3) erhalten wird und dieses eine grafische Kennzeichen (18) entweder reliefartig erhaben oder vertieft ist.

6. Verfahren nach einem der Ansprüche von 1 bis 4, wobei das geformte Element (3) aus einem durchsichtigen Werkstoff hergestellt ist, so dass zumindest ein auf der Außenfläche (9; 109) des Körpers (2; 102) vorhandenes grafisches Kennzeichen unter dem geformten Element (3) sichtbar ist.

7. Vorrichtung zum Formpressen einer zugemessenen Menge (43) Polymermaterial in Kontakt mit einem becherförmigen Körper (2; 102), wobei der Körper (2; 102) eine Seitenwand (4) aufweist, die sich um eine Achse (Z) erstreckt, und eine Querwand (5; 105), die quergerichtet zu der Achse (Z) ist, um eine Konkavität (7) des Körpers (2; 102) zu begrenzen, wobei die Querwand (5; 105) eine Innenfläche (8; 108) aufweist, die der Konkavität (7) zugewandt ist, und eine Außenfläche (9; 109), die der Innenfläche (8; 108) gegenüberliegt, wobei die Vorrichtung (20) umfasst: - ein Stützelement (24), das dafür ausgelegt ist, mit der Innenfläche (8; 108) der Querwand (5; 105) in Eingriff zu gelangen, um den Körper (2) abzustützen, während die zugemessene Menge (43) formgepresst wird;
- ein als Patrize wirkendes Formelement (33) zum Formen der zugemessenen Menge (43) in Kontakt mit der Außenfläche (9; 109), um aus der zugemessenen Menge (43) ein geformtes Element (3) zu erhalten, das an der Querwand (5; 105) angebracht ist;
- ein Blockierelement (34), um den Körper (2; 102) in einer festen Stellung in Kontakt mit dem Stützelement (24) zu halten, während die zugemessene Menge (43) formgepresst wird,
**dadurch gekennzeichnet, dass** das Blockierelement (34) einen in Form eines geschlossenen Rings ausgebildeten Blockiervorsprung (36) umfasst, wobei der Blockiervorsprung (36) so konfiguriert ist, dass er die Außenfläche (9; 109) in einer das geformte Element (3) umgebenden Zone berührt, um somit die Querwand (5; 105) gegen das Stützelement (24) gedrückt zu halten.

8. Vorrichtung nach Anspruch 7, wobei das Blockierelement (34) einen Halterand (37) umfasst, um den Körper (2) in einer Verbindungszone (6) der Verbindung der Seitenwand (4) mit der Querwand (5; 105) zu berühren, um zu verhindern, dass der Körper (2) seitlich verschoben werden kann, während die zugemessene Menge (43) formgepresst wird.

9. Vorrichtung nach Anspruch 8, wobei der Halterand (37) den Blockiervorsprung (36) umgibt und eine ringförmige Rille (38) den Blockiervorsprung (36) von dem Halterand (37) trennt.

10. Vorrichtung nach einem der Ansprüche von 7 bis 9, wobei das Blockierelement (34) das als Patrize wirkende Formelement (33) umgibt und relativ zu dem als Patrize wirkenden Formelement (33) beweglich ist, insbesondere entgegen der Wirkung eines elastischen Elements (40).

11. Verfahren nach einem der Ansprüche von 7 bis 10, und ferner umfassend eine das Stützelement (24) umgebende periphere Stütze (29), zur aufliegenden Aufnahme eines peripheren Randes (19) der Seitenwand (4), wobei der periphere Rand (19) an einem Ende der Seitenwand (4) angeordnet ist, das der Querwand (5; 105) gegenüberliegt.

12. Vorrichtung nach Anspruch 11, wobei die periphere Stütze (29) und das Stützelement (24) relativ zueinander beweglich sind zwischen einer ersten Stellung, in der sich die periphere Stütze (29) auf einem höheren oder demselben Niveau wie das Stützelement (24) befindet, so dass die periphere Stütze (29) den peripheren Rand (19) der Seitenwand (4) stützt, und einer zweiten Stellung, in der das Stützelement (24) von der peripheren Stütze (29) hervorragt, so dass der Körper (2; 102) durch das Stützelement (24) gestützt wird, ohne mit der peripheren Stütze (29) zu interferieren.

13. Vorrichtung nach einem der Ansprüche von 7 bis 12, wobei das Stützelement eine Auflagefläche (25) zur Aufnahme der darauf aufliegenden Innenfläche (8; 108) des Körpers (2; 102) umfasst, und die Vorrichtung vorzugsweise ferner eine Bewegungsvorrichtung umfasst, um das als Patrize wirkende Formelement (33) und das Stützelement (24) relativ zueinander zu bewegen zwischen einer abgerückten Stellung, in der die zugemessene Menge (43) auf die Außenfläche (9; 109) aufgebracht wird, und einer Formungsstellung, in der die zugemessene Menge (43) zwischen dem als Patrize wirkenden Formelement (33) und der Querwand (5; 105) geformt wird.

## Revendications

1. Un procédé comprenant les phases consistant à :
- fournir un corps en forme de capuchon (2 ; 102), ledit corps (2 ; 102) ayant une paroi latérale (4) s'étendant autour d'un axe (Z) et une paroi transversale (5 ; 105) disposée transversalement à l'axe (Z) pour délimiter une concavité (7) du corps (2), la paroi transversale (5 ; 105) ayant une face intérieure (8 ; 108) orientée vers la concavité (7) et une face extérieure (9 ; 109) opposée à la face intérieure (8 ; 108) ;
- déposer une dose (43) de matière polymère sur la face extérieure (9 ; 109) de la paroi transversale (5 ; 105) ;
- mouler par compression la dose (43) en contact avec la face extérieure (9 ; 109) au moyen d'un élément de moulage mâle (33), obtenant ainsi à partir de la dose (43) un élément profilé (3) attaché à la paroi transversale (5 ; 105),
- où, pendant la phase de moulage par compression, le corps (2 ; 102) est supporté par un élément de support (24) qui vient en prise avec la face intérieure (8 ; 108) de la paroi transversale (5 ; 105),
- et où un élément de blocage (34) maintient le corps (2 ; 102) dans une position fixe en contact avec l'élément de support (24), alors que la dose (43) est moulée par compression,
**caractérisé en ce que** l'élément de blocage (34) comprend une protubérance de blocage (36) profilée comme un anneau fermé, la protubérance de blocage (36) étant en contact avec la face extérieure (9 ; 109) dans une zone entourant l'élément profilé (3), maintenant ainsi la paroi transversale (5 ; 105) pressée contre l'élément de support (24).

2. Le procédé selon la revendication 1, dans lequel le corps en forme de capuchon (2 ; 102) est un corps d'un bouchon (1) de contenant, l'élément profilé (3) étant de préférence un disque plein, en particulier un disque circulaire.

3. Le procédé selon l'une quelconque des revendications précédentes, dans lequel, pendant la phase de dépose, la dose (43) est positionnée dans un renfoncement (12 ; 112) réalisé sur la face extérieure (9 ; 109) du corps (2 ; 102).

4. Le procédé selon la revendication 3, dans lequel, pendant la phase de moulage par compression, la dose (43) est écrasée jusqu'à ce que l'élément profilé (3) obtenu à partir de la dose (43) ait une surface libre (17) au ras d'une surface d'une zone de bord (16) de la face extérieure (9 ; 109), la zone de bord (16) entourant le renfoncement (12 ; 112).

5. Le procédé selon l'une quelconque des revendications précédentes, dans lequel, pendant la phase de moulage par compression, au moins un repère graphique (18) est obtenu sur l'élément profilé (3), ledit au moins un repère graphique (18) étant en relief ou en creux.

6. Le procédé selon l'une quelconque des revendications de 1 à 4, dans lequel l'élément profilé (3) est réalisé dans un matériau transparent, de manière à ce que soit visible au moins un repère graphique réalisé sur la face extérieure (9 ; 109) du corps (2 ; 102) en dessous de l'élément profilé (3).

7. Un appareil pour mouler par compression une dose (43) de matière polymère en contact avec un corps en forme de capuchon (2 ; 102), ledit corps (2 ; 102) ayant une paroi latérale (4) s'étendant autour d'un axe (Z) et une paroi transversale (5 ; 105) disposée transversalement à l'axe (Z) pour délimiter une concavité (7) du corps (2 ; 102), la paroi transversale (5 ; 105) ayant une face intérieure (8 ; 108) orientée vers la concavité (7) et une face extérieure (9 ; 109) opposée à la face intérieure (8 ; 108), l'appareil (20) comprenant :
- un élément de support (24) configuré pour venir en prise avec la face intérieure (8 ; 108) de la paroi transversale (5 ; 105) de manière à supporter le corps (2) alors que la dose (43) est moulée par compression ;
- un élément de moulage mâle (33) pour profiler la dose (43) en contact avec ladite face extérieure (9 ; 109), de manière à obtenir à partir de la dose (43) un élément profilé (3) attaché à la paroi transversale (5 ; 105) ;
- un élément de blocage (34) pour maintenir le corps (2 ; 102) dans une position fixe en contact avec l'élément de support (24), alors que la dose (43) est moulée par compression,
**caractérisé en ce que** l'élément de blocage (34) comprend une protubérance de blocage (36) profilée comme un anneau fermé, la protubérance de blocage (36) étant configurée pour venir en contact avec la face extérieure (9 ; 109) dans une zone entourant l'élément profilé (3), de manière à maintenir la paroi transversale (5 ; 105) pressée contre l'élément de support (24).

8. L'appareil selon la revendication 7, dans lequel l'élément de blocage (34) comprend un bord de confinement (37) pour venir en contact avec le corps (2) dans une zone de jonction (6) joignant la paroi latérale (4) et la paroi transversale (5 ; 105), de manière à empêcher des déplacements latéraux du corps (2) alors que la dose (43) est moulée par compression.

9. L'appareil selon la revendication 8, dans lequel le bord de confinement (37) entoure la protubérance de blocage (36), une rainure annulaire (38) séparant la protubérance de blocage (36) du bord de confinement (37).

10. L'appareil selon l'une quelconque des revendications de 7 à 9, dans lequel l'élément de blocage (34) entoure l'élément de moulage mâle (33) et est mobile par rapport à l'élément de moulage mâle (33), en particulier contre l'action d'un élément élastique (40).

11. L'appareil selon l'une quelconque des revendications de 7 à 10, et comprenant en outre un support périphérique (29) entourant l'élément de support (24) pour recevoir en appui un bord périphérique (19) de la paroi latérale (4), le bord périphérique (19) étant disposé à une extrémité de la paroi latérale (4) opposée à la paroi transversale (5 ; 105).

12. L'appareil selon la revendication 11, dans lequel le support périphérique (29) et l'élément de support (24) sont mobiles l'un par rapport à l'autre entre une première position dans laquelle le support périphérique (29) est à un niveau plus haut que ou égal à l'élément de support (24), de manière à ce que le support périphérique (29) supporte le bord périphérique (19) de la paroi latérale (4), et une deuxième position dans laquelle l'élément de support (24) dépasse par rapport au support périphérique (29), de manière à ce que le corps (2 ; 102) soit supporté par l'élément de support (24) sans interférer avec le support périphérique (29).

13. L'appareil selon l'une quelconque des revendications de 7 à 12, dans lequel l'élément de support comprend une surface d'appui (25) pour recevoir la face intérieure (8 ; 108) du corps (2 ; 102) en appui sur elle, l'appareil comprenant en outre de préférence un dispositif de déplacement pour déplacer l'élément de moulage mâle (33) et l'élément de support (24) l'un par rapport à l'autre entre une position espacée, dans laquelle la dose (43) est déposée sur la face extérieure (9 ; 109) et une position de formage, dans laquelle la dose (43) est profilée entre l'élément de moulage mâle (33) et la paroi transversale (5 ; 105).
